(19) **Europäisches Patentamt**
**European Patent Office**
**Office européen des brevets**

(11) **EP 4 783 030 A1**

(12) **EUROPEAN PATENT APPLICATION**
published in accordance with Art. 153(4) EPC

(43) Date of publication:
**29.07.2026 Bulletin 2026/31**

(51) International Patent Classification (IPC):
**G06F 16/901** (2019.01)

(21) Application number: **24876499.5**

(22) Date of filing: **08.10.2024**

(86) International application number:
**PCT/CN2024/123367**

(87) International publication number:
**WO 2025/077685 (17.04.2025 Gazette 2025/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.10.2023 CN 202311316222**

(71) Applicant: **HUAWEI TECHNOLOGIES CO., LTD.**
**Shenzhen 518129 (CN)**

(72) Inventors:
• **JIANG, Yuting**
**Shenzhen, Guangdong 518129 (CN)**
• **QIN, Ruichao**
**Shenzhen, Guangdong 518129 (CN)**
• **XIONG, Shuqi**
**Shenzhen, Guangdong 518129 (CN)**
• **WANG, Lingfeng**
**Shenzhen, Guangdong 518129 (CN)**
• **WANG, Yue**
**Shenzhen, Guangdong 518129 (CN)**
• **WANG, Yihe**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **TOPOLOGICAL GRAPH TRANSFORMATION METHOD AND APPARATUS, DEVICE, CLUSTER AND READABLE STORAGE MEDIUM**

(57) This application provides a topological graph transformation method and apparatus, a device, a cluster, and a readable storage medium. The method includes: obtaining a first target center type and an original topological graph that are input by a user, where the original topological graph includes an original central node and at least one original edge node, each original edge node is connected to the original central node through a link, and the first target center type is any one of types of original edge nodes in the original topological graph; determining a first target model based on the first target center type; transforming the original topological graph based on a first mapping relationship to obtain a first topological graph, where the first mapping relationship is constructed based on a relationship between an original model and the first target model, the original model is a topological model used for the original topological graph, and the first target model is a topological model used for the first topological graph; and outputting the first topological graph, where a first target central node in the first topological graph is an original edge node of the first target center type in the original topological graph.

FIG. 2

## Description

This application claims priority to Chinese Patent Application No. 202311316222.X, filed with the China National Intellectual Property Administration on October 11, 2023, and entitled "TOPOLOGICAL GRAPH TRANSFORMATION METHOD AND APPARATUS, DEVICE, CLUSTER, AND READABLE STORAGE MEDIUM", which is incorporated herein by reference in its entirety.

## TECHNICAL FIELD

This application relates to the field of data processing, and in particular, to a topological graph transformation method and apparatus, a device, a cluster, and a readable storage medium.

## BACKGROUND

A topological graph usually includes a plurality of nodes and a plurality of links. The topological graph can be used to facilitate in-depth analysis of a relationship between the nodes, and as such, is widely applied in fields such as network and communication. However, with technological advances, a quantity of nodes and links between the nodes increases exponentially, causing the topological graph to become increasingly complex and making it difficult to intuitively observe content of interest.

## SUMMARY

This application provides a topological graph transformation method and apparatus, a device, a cluster, and a readable storage medium, to enable intuitive observation of content of interest.

According to a first aspect, a topological graph transformation method is provided. A user inputs a first target center type and an original topological graph. Correspondingly, a compute device obtains the first target center type and the original topological graph that are input by the user. The original topological graph includes an original central node and at least one original edge node, and each original edge node is connected to the original central node through a link. The first target center type is any one of types of original edge nodes in the original topological graph. For example, the type of the original edge node in the original topological graph may include payment information, a user account, contact information, delivery information, and the like. In this case, the first target center type may be any one of the payment information, the user account, the contact information, and the delivery information. A topological model used for the original topological graph is an original model. Different target center types respectively correspond to different target models. Therefore, after obtaining the first target center type input by the user, the compute device may determine a first target model based on the first target center type. The first target model is a topological model that is to be used for a first topological graph obtained through topological graph transformation. The compute device may determine a first mapping relationship based on the original model and the first target model. The first mapping relationship is constructed based on a relationship between the original model and the first target model. The compute device transforms the original topological graph based on the first mapping relationship to obtain the first topological graph. Finally, the first topological graph is output. A first target central node in the first topological graph is an original edge node of the first target center type in the original topological graph. A first target edge node in the first topological graph is an original edge node in the original topological graph other than the original edge node of the first target center type. The first target central node is connected to the first target edge node through a link.

In the foregoing solution, the original central node is used as a center in the original topological graph. However, after topological graph transformation is performed, the original edge node in the original topological graph is used as a center in the first topological graph. In the original topological graph, a central node is the original central node, and a perspective of observation is always from the original central node. The original edge node, as a non-central node, can present scattered and irregular information, making it difficult for the user to obtain related information about the original edge node. In this solution, the central node is switched. This perspective switching helps the user observe from a perspective of the original edge node, so as to directly observe information about the original edge node as the central node.

In some possible embodiments, the user may select different original edge nodes as central nodes. In this case, the user only needs to input a second target center type. Correspondingly, the compute device receives the second target center type input by the user. The second target center type may be another one of the payment information, the user account, the contact information, and the delivery information. Different target center types respectively correspond to different target models. Therefore, after obtaining the second target center type input by the user, the compute device may determine a second target model based on the second target center type. The second target model is a topological model that is to be used for a second topological graph obtained through topological graph transformation. The compute device may determine a second mapping relationship based on the original model and the second target model. The second mapping relationship is constructed based on a relationship between the original model and the second target model. The compute device transforms the original topological graph based on the second mapping relationship to obtain the second topological graph. Finally, the second topological graph is output. A second target central node in the second topological graph is an original edge node of the second target center type in the original topological graph. A second target edge node in the second topological graph is an original edge node in the original topological graph other than the original edge node of the second target center type. The second target central node is connected to the second target edge node through a link. It may be understood that a target edge node in the first topological graph may be a target central node in the second topological graph. A target central node in the first topological graph may be a target edge node in the second topological graph. Similarly, the target edge node in the second topological graph may be the target central node in the first topological graph. The target central node in the second topological graph may be the target edge node in the first topological graph. For example, in the first topological graph, an original edge node A in the original topological graph is used as the first target central node, and an original edge node B in the original topological graph is used as the first target edge node; and in the second topological graph, the original edge node B in the original topological graph is used as the second target central node, and the original edge node A in the original topological graph is used as the second target edge node.

In some possible designs, the method further includes: The compute device counts a quantity of links between the first target central node and the first target edge node, and displays the quantity on the links between the first target central node and the first target edge node. After topological graph transformation, some links may be merged. Therefore, a quantity of links needs to be displayed on the links. For example, it is assumed that an original edge node A is connected to an original central node a through a link, and the original central node a is connected to an original edge node B through a link; and the original edge node A is connected to an original central node b through a link, and the original central node b is connected to the original edge node B through a link. In this case, after topological graph transformation is performed by using the original edge node A as the first target central node, the original edge node A is used as the first target central node, and the original edge node B is used as the first target edge node. Therefore, there should be two links between the first target central node (corresponding to the original edge node A) and the first target edge node (corresponding to the original edge node B). Similarly, a quantity of links may also be displayed on the links between the second target central node and the second target edge node in the second topological graph.

In the foregoing solution, the quantity of links between the first target central node and the first target edge node may be displayed, so that the user can more clearly analyze a relationship between the original edge nodes in the original topological graph.

In some possible designs, that the compute device transforms the original topological graph based on the first mapping relationship to obtain the first topological graph may be specifically: The compute device obtains a node set and a link set based on the original topological graph, where the node set includes the original central node and the at least one original edge node, and the link set includes the link between each original edge node and the original central node. The compute device determines a mapping table based on the node set and the link set, where the mapping table includes a mapping relationship between the original central node and a mapping set, and the mapping set includes the at least one original edge node. The compute device constructs the first topological graph by using the original edge node of the first target center type in the mapping set as the first target central node.

According to a second aspect, a topological graph transformation method is provided. A user may input a first aggregation condition and an original topological graph. Correspondingly, a compute device obtains the first aggregation condition and the original topological graph that are input by the user. The original topological graph includes a plurality of original central nodes and a plurality of original edge nodes, and the plurality of original central nodes are connected to the plurality of original edge nodes through links. The first aggregation condition is that there are links between a plurality of to-be-aggregated nodes and one or more same original edge nodes. In other words, the first aggregation condition may be that there are links between the plurality of to-be-aggregated nodes and one same original edge node, or may be that there are links between the plurality of to-be-aggregated nodes and a plurality of, or even all, same original edge nodes. Based on the first aggregation condition, the compute device selects a plurality of first to-be-aggregated nodes from the plurality of original central nodes, selects a plurality of first to-be-aggregated links from the links between the plurality of original central nodes and the plurality of original edge nodes, aggregates the plurality of first to-be-aggregated nodes to obtain a first aggregated node, aggregates the plurality of first to-be-aggregated links to obtain a first aggregated link, and may generate an aggregated graph based on the first aggregated node and the first aggregated link for presentation. For example, an original edge node A is connected to an original central node a through a link, the original central node a is connected to an original central node B through a link, the original edge node A is connected to an original central node b through a link, and the original central node b is connected to an original edge node C through a link. In this case, when the first aggregation condition is that the original central node a and the original central node b are connected to one same original edge node through links, the original central node a and the original central node b, as to-be-aggregated nodes, may be aggregated.

In the foregoing solution, when the original topological graph is complex, intuitive observation is difficult. Through aggregation, complexity can be reduced, enhancing intuitive observability for the user.

In some possible designs, in addition to applying a same aggregation condition to the entire original topological graph for aggregation, the original topological graph may be further divided into areas, where different aggregation conditions are applied to different areas. For example, the first aggregation condition is applied to a first area, and a second aggregation condition is applied to a second area. The second aggregation condition is that there are links between the plurality of to-be-aggregated nodes and one or more same original edge nodes. The first aggregation condition is different from the second aggregation condition. For example, the first aggregation condition is that there are links between the plurality of to-be-aggregated nodes and one same original edge node. The second aggregation condition is that there are links between the plurality of to-be-aggregated nodes and a plurality of same original edge nodes. A specific process is similar to the foregoing, and details are not described herein again. In addition to dividing the original topological graph into two areas, the original topological graph may be further divided into three or more areas, where different aggregation conditions are applied to respective areas. This is not specifically limited herein.

In some possible designs, after aggregation is performed, a plurality of to-be-aggregated nodes are aggregated into one aggregated node. To intuitively learn a quantity of the to-be-aggregated nodes that are aggregated and/or information about the to-be-aggregated nodes, one or both of a quantity of first to-be-aggregated nodes that are aggregated and information about the first to-be-aggregated nodes may be displayed on the first aggregated node.

According to a third aspect, a topological graph transformation apparatus is provided. The apparatus includes: an obtaining unit, a determining unit, a transformation unit, and an output unit.

The obtaining unit is configured to obtain a first target center type and an original topological graph that are input by a user, where the original topological graph includes an original central node and at least one original edge node, each original edge node is connected to the original central node through a link, and the first target center type is any one of types of original edge nodes in the original topological graph. The original edge node includes one or more of a user account, contact information, delivery information, and payment information.

The determining unit is configured to determine a first target model based on the first target center type.

The transformation unit is configured to transform the original topological graph based on a first mapping relationship to obtain a first topological graph, where the first mapping relationship is constructed based on a relationship between an original model and the first target model, the original model is a topological model used for the original topological graph, and the first target model is a topological model used for the first topological graph.

The output unit is configured to output the first topological graph, where a first target central node in the first topological graph is an original edge node of the first target center type in the original topological graph, a first target edge node in the first topological graph is an original edge node in the original topological graph other than the original edge node of the first target center type, and the first target central node is connected to the first target edge node through a link.

In some possible designs, the obtaining unit is further configured to obtain a second target center type input by the user, where the first target center type is another one of the types of the original edge nodes in the original topological graph. The determining unit is further configured to determine a second target model based on the second target center type. The transformation unit is further configured to transform the original topological graph based on a second mapping relationship to obtain a second topological graph, where the second mapping relationship is constructed based on a relationship between the original model and the second target model, and the second target model is a topological model used for the second topological graph. The output unit is further configured to output the second topological graph, where a second target central node in the second topological graph is an original edge node of the second target center type in the original topological graph.

In some possible designs, the apparatus further includes a counting unit. The counting unit is configured to count a quantity of links between the first target central node and the first target edge node, and the output unit is further configured to display the quantity on the links between the first target central node and the first target edge node.

In some possible designs, the transformation unit is configured to: obtain a node set and a link set based on the original topological graph; determine a mapping table based on the node set and the link set; and construct the first topological graph by using the original edge node of the first target center type in a mapping set as the first target central node. The node set includes the original central node and the at least one original edge node. The link set includes the link between each original edge node and the original central node. The mapping table includes a mapping relationship between the original central node and the mapping set. The mapping set includes the at least one original edge node.

According to a fourth aspect, a topological graph transformation apparatus is provided. The topological graph transformation apparatus includes an obtaining unit, a selection unit, an aggregation unit, a generation unit, and a presentation unit.

The obtaining unit is configured to obtain a first aggregation condition and an original topological graph that are input by a user. The original topological graph includes a plurality of original central nodes and a plurality of original edge nodes, and the plurality of original central nodes are connected to the plurality of original edge nodes through links. The first aggregation condition is that there are links between a plurality of aggregated nodes and one or more same original edge nodes.

The selection unit is configured to: based on the first aggregation condition, select a plurality of first to-be-aggregated nodes from the plurality of original central nodes, and select a plurality of first to-be-aggregated links from the links between the plurality of original central nodes and the plurality of original edge nodes.

The aggregation unit is configured to: aggregate the plurality of first to-be-aggregated nodes to obtain a first aggregated node, and aggregate the plurality of first to-be-aggregated links to obtain a first aggregated link.

The generation unit is configured to generate an aggregated graph based on the first aggregated node and the first aggregated link.

The presentation unit is configured to present the aggregated graph.

In some possible designs, the original topological graph is divided into areas, where different aggregation conditions are applied to different areas. For example, the first aggregation condition is applied to a first area, and a second aggregation condition is applied to a second area. The second aggregation condition is that there are links between the plurality of to-be-aggregated nodes and one or more same original edge nodes. The first aggregation condition is different from the second aggregation condition.

In some possible designs, the display unit is further configured to display, on the first aggregated node, one or both of a quantity of the first to-be-aggregated nodes that are aggregated and information about the first to-be-aggregated nodes.

According to a fifth aspect, a compute device is provided. The compute device includes a processor and a memory, the memory is configured to store instructions, and the processor is configured to execute the instructions, to cause the compute device to implement the method according to either the first aspect or the second aspect.

According to a sixth aspect, a compute cluster is provided. The compute cluster includes a plurality of compute devices. Each compute device includes a processor and a memory, the memory is configured to store instructions, and the processor is configured to execute the instructions, to cause the plurality of compute devices to implement the method according to either the first aspect or the second aspect.

According to a seventh aspect, a computer-readable storage medium is provided. The computer-readable storage medium stores instructions, and when the instructions are run by a compute device or a compute device cluster, the method according to either the first aspect or the second aspect is implemented.

According to an eighth aspect, a computer program product including program code is provided. When the program code is executed, the method according to either the first aspect or the second aspect is implemented.

**BRIEF DESCRIPTION OF DRAWINGS**

To describe the technical solutions in embodiments of this application or in the background more clearly, the following describes the accompanying drawings required for describing embodiments of this application or the background.

FIG. 1 is a diagram of a structure of an original topological graph according to this application;
FIG. 2 is a schematic flowchart of a topological graph transformation method according to this application;
FIG. 3A to FIG. 3D are diagrams of relationships between some original central nodes and original edge nodes according to this application;
FIG. 4 is a schematic flowchart of generating a first topological graph according to this application;
FIG. 5A to FIG. 5C are diagrams of transforming an original topological graph into a first topological graph according to this application;
FIG. 6 is a diagram of a first topological graph obtained by processing the original topological graph shown in FIG. 1 based on the topological graph transformation method shown in FIG. 2;
FIG. 7 is a schematic flowchart of another topological graph transformation method according to this application;
FIG. 8 is a diagram of an aggregated graph obtained by processing the original topological graph shown in FIG. 1 based on the topological graph transformation method shown in FIG. 7;
FIG. 9 is a diagram of a structure of a topological graph transformation apparatus according to this application;
FIG. 10 is a diagram of a structure of another topological graph transformation apparatus according to this application; and
FIG. 11 is a diagram of a structure of a compute device according to this application.

**DESCRIPTION OF EMBODIMENTS**

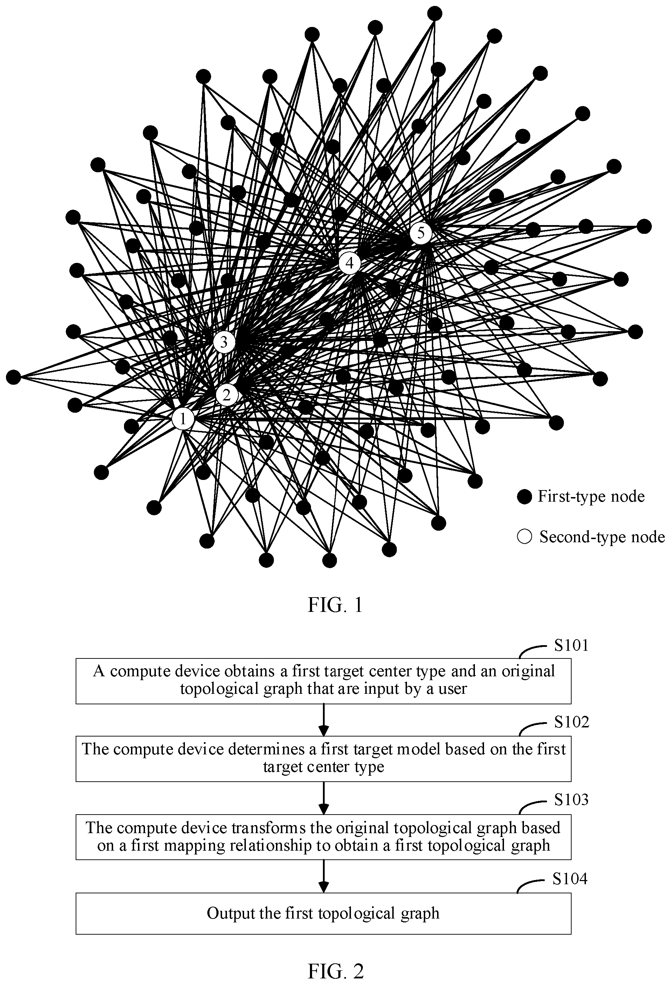

FIG. 1 is a diagram of a structure of an original topological graph according to this application. As shown in FIG. 1, the original topological graph includes a central node and an edge node.

An original central node may be one or more nodes in the original topological graph, and an original edge node may be one or more other nodes in the original topological graph. The original central node may be connected to the original edge node through a link. When the original topological graph is a star topological graph, there is no link between any two original edge nodes to connect the any two nodes. The following describes the original topological graph in detail by using an e-commerce scenario as an example. In the e-commerce scenario, each transaction of a customer is carried out based on a transaction number. Because payment is required in the transaction, the transaction involves payment information of the customer; because delivery to the customer needs to be ensured in the transaction, the transaction involves contact information of the customer; because the transaction needs to be carried out on an e-commerce platform, the transaction involves a user account of the customer on the e-commerce platform; because logistics need to be ensured in the transaction, the transaction involves delivery information; and so on. Therefore, the transaction number may be used as a central node, the payment information, the contact information, the user account, the delivery information, and the like may be used as original edge nodes, and the original central node (the transaction number) is associated with each original edge node (for example, the payment information, the contact information, the user account, or the delivery information) through a link. It should be understood that, the foregoing example is merely used as an illustration, where the original central node is the transaction number, the original edge nodes are the payment information, the contact information, the user account, and the delivery information, and there is a link between each original central node and each original edge node. However, in actual practice, the original central node may include more types, for example, the transaction number and a user identifier, the original edge node may also include more or fewer types, and there may be no link between the original central node and a part of original edge nodes. For example, in a transaction, if a user forgets to fill in contact information, a transaction number is not associated with the contact information through a link. However, the original topological graph clearly has a plurality of problems. For example, the original topological graph has a single dimension, and a relationship between nodes can only be analyzed by using the original central node as a center. The original edge nodes lack direct associations with one another and can only be associated via the original central node. Consequently, a relationship between the original edge nodes cannot be clearly presented. In addition, there are excessive redundant nodes. When a large quantity of original central nodes share a same original edge node, node density is high, connections intersect, rendering for display is difficult, operational lag occurs, and experience is poor.

FIG. 2 is a schematic flowchart of a topological graph transformation method according to this application. As shown in FIG. 2, the topological graph transformation method in this application includes the following steps.

S101: A compute device obtains a first target center type and an original topological graph that are input by a user.

In some possible embodiments, the original topological graph includes an original central node and an original edge node. There is one or more original central nodes, and there are a plurality of original edge nodes. Each original central node is connected to at least one original edge node through a link. When the original topological graph is a star topological graph, there may be a link between the original central node and the original edge node, and there is no link between any two edge nodes. In other words, the original edge nodes can be connected to each other only via the original central node, and any two original edge nodes cannot be directly connected to each other.

When there is one original central node, it is assumed that the original central node includes a first original central node, and the original edge nodes include a first original edge node and a second original edge node. In this case, there is a link between the first original central node and the first original edge node, and there is also a link between the first original central node and the second original edge node. However, there is no link between the first original edge node and the second original edge node. In the foregoing example, only two original edge nodes are used as an example for description. However, the original topological graph may further include a third original edge node or even more original edge nodes. Correspondingly, there may be a link between the first original central node and the third original edge node, there is no link between the third original edge node and the first original edge node, and there is also no link between the third original edge node and the second original edge node. In addition, there may be links between the first original central node and more original edge nodes, but there is no link between any two of these original edge nodes.

When there are a plurality of original central nodes, it is assumed that the original central nodes include a first original central node and a second original central node, and the original edge nodes include a first original edge node and a second original edge node. In this case, there is a link between the first original central node and the first original edge node, there is also a link between the first original central node and the second original edge node, there is a link between the second original central node and the first original edge node, and there is also a link between the second original central node and the second original edge node. However, there is no link between the first original edge node and the second original edge node. In the foregoing example, two original central nodes, two original edge nodes, and that each original central node is connected to each original edge node through a link are used as an example for description. However, in actual practice, there may be more original central nodes, there may be more original edge nodes, and relationships between the original central nodes and the original edge nodes are more diversified.

In actual practice, as quantities of original central nodes and original edge nodes in the original topological graph increase, the original topological graph becomes very large and complex. However, after the original topological graph is divided sufficiently finely, the following cases may be included.

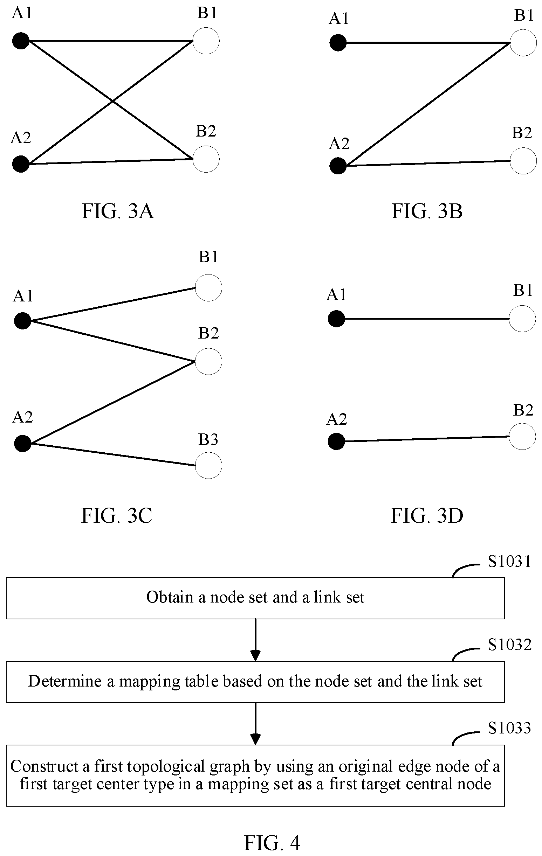

(1) Different original central nodes may be connected to same original edge nodes through links. For example, in an example shown in FIG. 3A, an original central node A1 and an original central node A2 are separately connected to same original edge nodes (an original edge node B1 and an original edge node B2) through links.

(2) Different original central nodes may be connected to some of same original edge nodes through links. For example, in an example shown in FIG. 3B, an original central node A1 is connected to an original edge node B1 through a link, and the original central node A1 is connected to an original edge node B2 through a link, but an original central node A2 is connected only to the original edge node B1 through a link. Alternatively, in an example shown in FIG. 3C, an original central node A1 is connected to an original edge node B1 through a link, but there is no link between an original central node A2 and the original edge node B1; the original central node A1 is connected to an original edge node B2 through a link, and the original central node A2 is also connected to the original edge node B2 through a link; and the original central node A1 is not connected to an original edge node B3 through a link, and the original central node A2 is connected to the original edge node B3 through a link.

(3) Different original central nodes may be connected to different original edge nodes through links. For example, in an example shown in FIG. 3D, an original central node A1 is connected to an original edge node B1 through a link, but an original central node A2 is connected to the original edge node B1 through a link; and the original central node A1 is connected to an original edge node B2 through a link, but the original central node A2 is connected to the original edge node B1 through a link.

In some possible embodiments, a topological model used for the original topological graph is an original topological model. Herein, the original topological model is a model in which the original central node is used as a center, and the original central node is connected to the original edge node in a star topology.

In some possible embodiments, the original topological graph may be the original topological graph shown in FIG. 1.

In some possible embodiments, the first target center type is used for determining a topological model used for a transformed topological graph. Different original edge nodes correspond to different target center types, and different target center types correspond to different topological models. For example, the first original edge node corresponds to the first target center type, and the first target center type corresponds to a first topological model; and the second original edge node corresponds to a second target center type, and the second target center type corresponds to a second topological model.

S102: The compute device determines a first target model based on the first target center type.

In some possible embodiments, the compute device stores a type mapping relationship between different target center types and different target types. When the user inputs the first target center type, the compute device may query the type mapping relationship based on the first target center type, to obtain the first target model. The first target model is a topological model used after topological graph transformation. Herein, the first target model is a topological model in which the first original edge node is used as a center, and the first original edge node is connected to at least one other original edge node in the original topological graph through a link.

S103: The compute device transforms the original topological graph based on a first mapping relationship to obtain a first topological graph.

In some possible embodiments, the compute device stores mapping relationships between an original model and different target models, for example, the first mapping relationship between the original model and the first target model, and a second mapping relationship between the original model and a second target model. Correspondingly, the first mapping relationship is constructed based on a relationship between the original model and the first target model. The second mapping relationship is constructed based on a relationship between the original model and the second target model. When it is determined that the original topological graph is finally to be transformed into a topological graph in which a topological model is the first target model, the first mapping relationship may be determined.

In some possible embodiments, as shown in FIG. 4, that the compute device transforms the original topological graph based on the first mapping relationship to obtain the first topological graph may include the following steps.

S1031: Obtain a node set and a link set. The node set includes the original central node and the at least one original edge node, and the link set includes the link between the original central node and the at least one original edge node.

In some possible embodiments, it is assumed that an original central node includes a first original central node A1, original edge nodes include a first original edge node B1 and a second original edge node B2, the first original central node A1 is connected to the first original edge node B1 through a link A1->B1, and the first original central node A1 is connected to the second original edge node B2 through a link A1->B2.

In this case, the node set may be represented as [A1, B1, B2]; and
the link set may be represented as [A1- > B1, A1- > B2].

In some possible embodiments, it is assumed that an original central node includes a first original central node A1, original edge nodes include a first original edge node B1, a second original edge node B2, and a third original edge node B3, the first original central node A1 is connected to the first original edge node B1 through a link A1- > B1, the first original central node A1 is connected to the second original edge node B2 through a link A1- > B2, and the first original central node A1 is connected to the third original edge node through a link A1- > B3.

In this case, the node set may be represented as [A1, B1, B2, B3]; and
the link set may be represented as [A1- > B1, A1- > B2, A1- > B3].

In some possible embodiments, it is assumed that original central nodes include a first original central node A1 and a second original central node A2, original edge nodes include a first original edge node B1 and a second original edge node B2, the first original central node A1 is connected to the first original edge node B1 through a link A1- > B1, the first original central node A1 is connected to the second original edge node B2 through a link A1- > B2, and the second original central node A2 is connected to the first original edge node B1 through a link A2- > B1.

In this case, the node set may be represented as

$$\begin{bmatrix} A1, & B1, & B2 \\ A2, & B1, & B2 \end{bmatrix}; and$$

the link set may be represented as

$$\begin{bmatrix} A1->B1, & A1->B2 \\ A2->B1, & A2->B2 \end{bmatrix}.$$

In the foregoing three examples, a simple example of one original central node and two original edge nodes, or one original central node and three original edge nodes, or two original central nodes and two original edge nodes is used for description. As quantities of original central nodes and original edge nodes increase, the node set and the link set become more complex. However, the rest may be deduced by analogy still in the foregoing manner. When the rest is deduced by analogy, in the node set, a 1st element in each row represents one original central node, and another element in the row represents an original edge node connected to the original central node through a link. The foregoing examples are used. A 1st row in the node set represents the original central node A1 and an original edge node connected to the original central node A1 through a link, the 1st row represents the original central node A2 and an original edge node connected to the original central node A2 through a link. Specifically, in the node set, a 1st element in the 1st row represents the original central node A1, a 2nd element in the 1st row represents the original edge node B1 connected to the original central node A1 through the link, and a 3rd element in the 1st row represents the original edge node B2 connected to the original central node A1 through the link; and in the node set, a 1st element in the 2nd row represents the original central node A2, a 2nd element in the 2nd row represents the original edge node B1 connected to the original central node A2 through the link, and a 3rd element in the 2nd row represents the original edge node B2 connected to the original central node A2 through the link. In the link set, an element in each row represents a link between an original central node and an original edge node. The foregoing examples are used. A 1st row represents a link between the original central node A1 and an original edge node, and a 2nd row represents a link between the original central node A2 and an original edge node. Specifically, in the link set, a 1st element in the 1st row is the link A1->B1 between the original central node A1 and the original edge node B1, and a 2nd element in the 1st row is the link A1->B2 between the original central node A1 and the original edge node B2; and in the link set, a 1st element in the 2nd row is the link A2->B1 between the original central node A2 and the original edge node B1, and a 2nd element in the 2nd row is the link A2->B2 between the original central node A2 and the original edge node B2. Therefore, when a quantity of original edge nodes connected to an original central node through links is larger, quantities of columns corresponding to this row in the node set and the link set are correspondingly larger. When a quantity of original central nodes is larger, quantities of rows in the node set and the link set are larger, but the quantities of rows in the node set and the link set are the same. Elements in a 1st column in the node set may represent different original central nodes. Therefore, the elements in the 1st column in the node set may be different. In the node set, elements in columns other than the 1st column may be the same or different. In the link set, left start nodes of elements (links) in a same row may be the same, and left start nodes of elements (links) in different rows may be different. In the link set, right end nodes of elements (links) in a same row are different, and right end nodes of elements (links) in different rows may be the same, may be different, or may be partially the same. Different original central nodes may be connected to different quantities of original edge nodes through links, or may be connected to a same quantity of original edge nodes through links. Therefore, quantities of columns corresponding to different rows in the node set and the link set may be different or the same. However, in a same row in the node set and the link set, the node set always has one more column than the link set. For example, the 1st row in the node set corresponds to three columns, the 1st row in the link set corresponds to two columns, the 2nd row in the node set corresponds to four columns, and the 2nd row in the link set corresponds to three columns.

S1032: Determine a mapping table based on the node set and the link set.

In some possible embodiments, the node set and the link set are respectively as follows:

the node set [A1, B1, B2]; and
the link set [A1- > B1, A1- > B2].

A mapping table M may be represented as A1- > {B1, B2} .

Herein, the mapping table includes a mapping relationship between the first original central node and a first mapping set. The first mapping set includes the first original edge node and the second original edge node that are connected to the first original central node through the links. A1 represents the first original central node, {B1, B2} represents the first mapping set, B1 represents the first original edge node B1 connected to the first original central node A1 through the link, B2 represents the second original edge node B2 connected to the first original central node A1 through the link, and -> represents mapping from the first original central node A1 to the first mapping set {B1, B2}.

In some possible embodiments, the node set and the link set are respectively as follows:

The node set may be represented as [A1, B1, B2, B3]; and

the link set may be represented as [A1- > B1, A1- > B2, A1- > B3] .

A mapping table M may be represented as A1- > {B1, B2, B3}.

Herein, the mapping table includes a mapping relationship between the first original central node and a first mapping set. The first mapping set includes the first original edge node, the second original edge node, and the third original edge node that are connected to the first original central node through links. A1 represents the first original central node, {B1, B2, B3} represents the first mapping set, B1 represents the first original edge node B1 connected to the first original central node A1 through the link, B2 represents the second original edge node B2 connected to the first original central node A1 through the link, B3 represents the third original edge node B3 connected to the first original central node A1 through the link, and -> represents mapping from the first original central node A1 to the first mapping set {B1, B2, B3}.

In some possible embodiments, the node set and the link set are respectively as follows:

The node set may be represented as $\begin{bmatrix} A1, \ B1, \ B2 \\ A2, \ B1, \ B2 \end{bmatrix}$ ;

and the link set may be represented as

$$\begin{bmatrix} A1->B1, \ A1->B2 \\ A2->B1, \ A2->B2 \end{bmatrix}.$$

A mapping table M may be represented as A1- > {B1, B2} ; and A2- > {B1, B2}.

Herein, the mapping table includes a mapping relationship between the first original central node and a first mapping set and a mapping relationship between the second original central node and a second mapping set. The first mapping set includes the first original edge node and the second original edge node that are connected to the first original central node through the links. The second mapping set includes the first original edge node and the second original edge node that are connected to the second original central node through the links. A1 represents the first original central node, {B1, B2} represents the first mapping set, B1 represents the first original edge node B1 connected to the first original central node A1 through the link, B2 represents the second original edge node B2 connected to the first original central node A1 through the link, and A1- > {B1, B2} represents mapping from the first original central node A1 to the first mapping set {B1, B2}. A2 represents the second original central node, {B1, B2} represents the second mapping set, B1 represents the first original edge node B1 connected to the second original central node A2 through the link, B2 represents the second original edge node B2 connected to the second original central node A2 through the link, and A2- > {B1, B2} represents mapping from the second original central node A2 to the first mapping set {B1, B2}.

In the foregoing examples, a simple example of one original central node and two original edge nodes, one original central node and three original edge nodes, or two original central nodes and two original edge nodes is used for description. As quantities of original central nodes and original edge nodes increase, the mapping table M becomes more complex. However, the rest may still be deduced by analogy in the foregoing manner. When the rest is deduced by analogy, in different mapping relationships, a left side of "->" may represent different original central nodes, and a right side of "->" may represent mapping sets respectively corresponding to different original central nodes. A larger quantity of original central nodes indicates a larger quantity of mapping relationships in a mapping table, and a larger quantity of original edge nodes connected to the original central node through links indicates a larger quantity of elements in a mapping set. Because different original central nodes may be connected to different original edge nodes through links, or may be connected to a same original edge node through links, mapping sets in different mapping relationships may be the same or different. The difference herein may include one or both of different quantities and different elements.

S1033: Construct the first topological graph by using the original edge node of the first target center type in the mapping set as the first target central node.

In some possible embodiments, it is assumed that the mapping table M includes a first mapping relationship:

A1- > {B1, B2} .

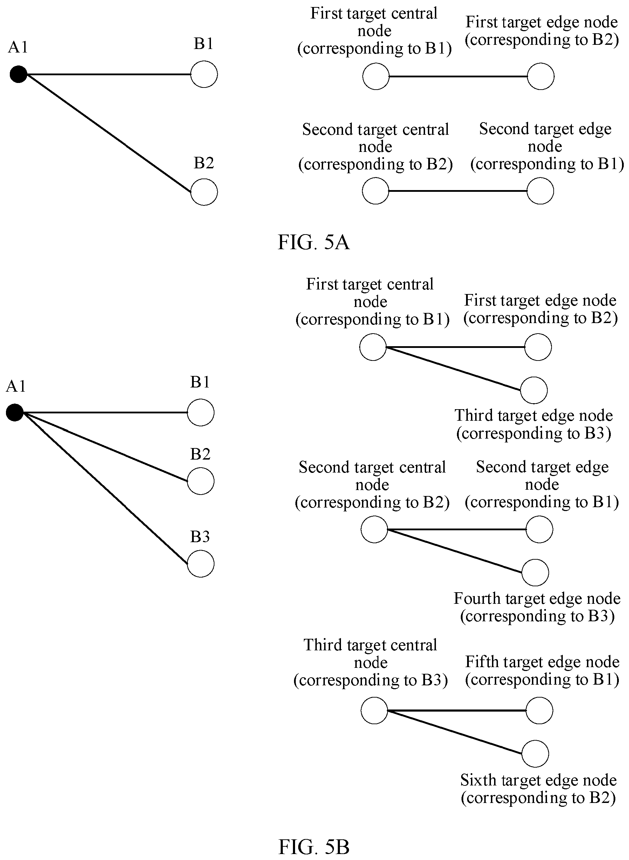

In this case, from the first mapping set, the first original edge node B1 may be selected as the first target central node, and the second original edge node B2 may be selected as the first target edge node, to construct the link between the first target central node and the first target edge node. Then, from the first mapping set, the second original edge node B1 is selected as the second target central node, and the first original edge node is selected as the second target edge node, to construct the link between the second target central node and the second target edge node. Therefore, a first topological graph shown on a right side of FIG. 5A may be constructed based on an original topological graph shown on a left side of FIG. 5A. Herein, the first target central node, the first target edge node, and the link between the first target central node and the first target edge node form a node topological relationship, and the second target central node, the second target edge node, and the link between the second target central node and the second target edge also form a node topological relationship.

In some possible embodiments, it is assumed that the mapping table M includes a first mapping relationship:
A1- > {B1, B2, B3}.

In this case, from the first mapping set, the first original edge node B1 may be selected as the first target central node, and the second original edge node B2 may be selected as the first target edge node, to construct the link between the first target central node and the first target edge node. From the first mapping set, the second original edge node B1 is selected as the second target central node, and the first original edge node is selected as the second target edge node, to construct the link between the second target central node and the second target edge node; and the first original edge node B1 is selected as the first target central node, and the third original edge node is selected as the third target edge node, to construct the link between the first target central node and the third target edge node. From the first mapping set, the second original edge node B2 is selected as the second target central node, and the third original edge node B3 is selected as a fourth target edge node, to construct a link between the second target central node and the fourth target edge node. From the first mapping set, the third original edge node is selected as a third target central node, and the first original edge node B1 is selected as a fifth target edge node, to construct a link between the third target central node and the fifth target edge node; and the third original edge node B3 is selected as the third target central node, and the second original edge node B2 is selected as a sixth target edge node, to construct a link between the third target central node and the sixth target edge node. Therefore, a first topological graph shown on a right side of FIG. 5B may be constructed based on an original topological graph shown on a left side of FIG. 5B. Herein, the first target central node, the first target edge node, the third target edge node, the link between the first target central node and the first target edge node, and the link between the first target central node and the third target edge node may form a node topological relationship; the second target central node, the second target edge node, the fourth target edge node, the link between the second target central node and the second target edge node, and the link between the second target central node and the fourth target edge node may form a node topological relationship; and the third target central node, the fifth target edge node, the sixth target edge node, the link between the third target central node and the fifth target edge node, and the link between the third target central node and the sixth target edge node may form a node topological relationship. Clearly, the first topological graph in FIG. 5B including three node topological relationships has one more node topological relationship than the first topological graph in FIG. 5A including two node topological relationships.

In some possible embodiments, it is assumed that the mapping table M includes a first mapping relationship and a second mapping relationship:
A1- > {B1, B2} ; and A2- > {B1, B2}.

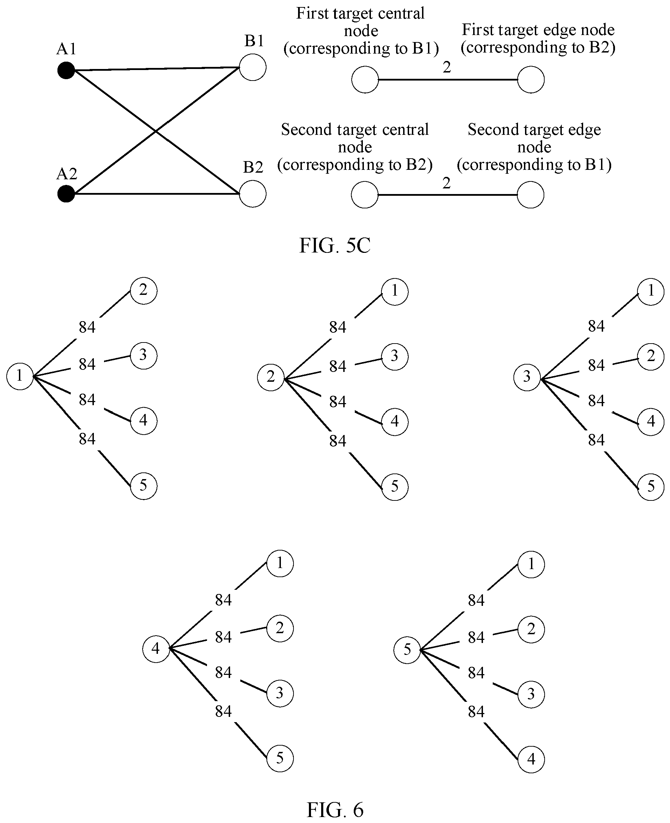

In this case, from the first mapping set, the first original edge node B1 may be selected as the first target central node, and the second original edge node B2 may be selected as the first target edge node, to construct the link between the first target central node and the first target edge node. Then, from the first mapping set, the second original edge node B1 is selected as the second target central node, and the first original edge node is selected as the second target edge node, to construct the link between the second target central node and the second target edge node. From the second mapping set, the first original edge node B1 may be selected as the first target central node, and the second original edge node B2 may be selected as the first target edge node, to construct the link between the first target central node and the first target edge node. Then, from the first mapping set, the second original edge node B1 is selected as the second target central node, and the first original edge node is selected as the second target edge node, to construct the link between the second target central node and the second target edge. It can be learned from the foregoing descriptions that there should be two links between the first target central node and the first target edge node, and there should also be two links between the second target central node and the second target edge node. Therefore, only one link may be displayed between the first target central node and the first target edge node, and then a number 2 is displayed on the link, to indicate that there are two links between the first target central node and the first target edge node. Similarly, one link may be displayed between the second target central node and the second target edge node, and then a number 2 is displayed on the link. Herein, the first target central node, the first target edge node, and the link between the first target central node and the first target edge node form a node topological relationship, and the second target central node, the second target edge node, and the link between the second target central node and the second target edge node also form a node topological relationship. Two node topological relationships included in a first topological graph in FIG. 5C each include one more link than the two node topological relationships included in the first topological graph in FIG. 5A.

In the foregoing examples, a simple example of one original central node and two original edge nodes, one original central node and three original edge nodes, or two original central nodes and two original edge nodes is used for description. As quantities of original central nodes and original edge nodes increase, the generated first topological graph becomes more complex. However, the rest may be deduced by analogy still in the foregoing manner. When the rest is deduced by analogy, if the quantity of original edge nodes remains unchanged, when the quantity of original central nodes increases, the quantity of links in the first topological graph increases; or if the quantity of original central nodes remains unchanged, when the quantity of original edge nodes increases, a quantity of node topological relationships in the first topological graph increases. For two same original edge nodes, regardless of which node is used as a target central node and which node is used as a target edge node, quantities of links of the two original edge nodes in the first topological graph are the same. Because different original central nodes may have links to different quantities of original edge nodes, corresponding quantities of links may be the same or different when at least one of the target central node or the target edge node is different.

S104: Output the first topological graph.

In the foregoing examples, step S101 is described by using an example in which the first target type and the original topological graph are simultaneously input. In actual practice, the original topological graph may be input first, and then the first target type is input, or a first original topological graph is input first. This is not specifically limited herein.

The foregoing examples describe in detail how the original topological graph is transformed by using the original edge node of the first target type as a central node to obtain the first topological graph. When the user expects to perform topological transformation by using an original edge node of a second target type as a central node to obtain a second topological graph, once the second target type needs to be input, the compute device may perform topological transformation in a manner similar to the foregoing manner to obtain the second topological graph. Details are not described herein again.

When the original topological graph is simple, an advantage of the first topological graph cannot be presented. When a relationship of the original topological graph is complex, the advantage of the first topological graph can be well presented. For example, the original topological graph shown in FIG. 1 is transformed to obtain a first topological graph shown in FIG. 6. In comparison with the original topological graph shown in FIG. 1, the first topological graph shown in FIG. 6 has the following significant advantages: A quantity of nodes in the first topological graph in FIG. 6 is clearly less than a quantity of nodes in the original topological graph shown in FIG. 1; and a quantity of links directly presented in the first topological graph in FIG. 6 is clearly less than a quantity of links directly presented in the original topological graph shown in FIG. 1. Relationships between nodes in the first topological graph in FIG. 6 are simpler than relationships between nodes in the original topological graph shown in FIG. 1. In a second topological graph in FIG. 6, each original edge node in the original topological graph is used as a center, but an original central node is used as a center in the original topological graph. The first topological graph in FIG. 6 presents links between original edge nodes in the original topological graph, in other words, a relationship between the original edge nodes in the original topological graph can be intuitively presented. The original edge nodes in the original topological graph in FIG. 1 are not connected to each other through links, and the original edge nodes can be associated with each other only via the original central nodes, and therefore, the relationship between the original edge nodes cannot be intuitively presented.

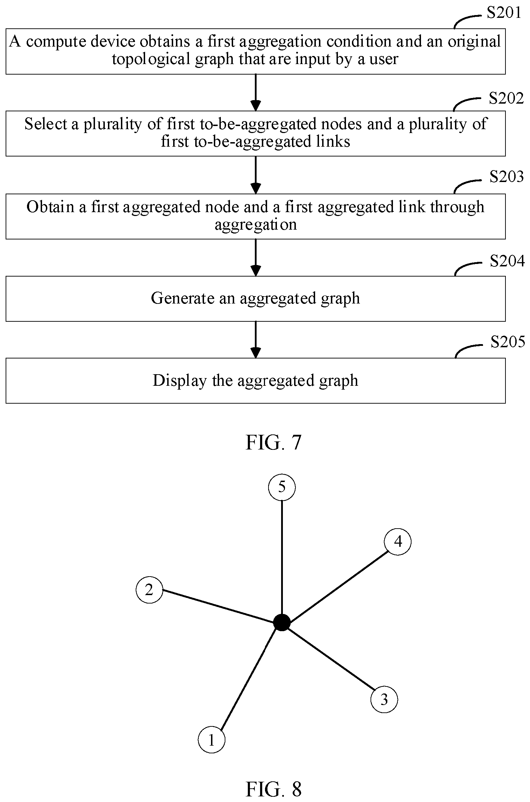

FIG. 7 is a schematic flowchart of another topological graph transformation method according to this application. As shown in FIG. 7, the topological graph transformation method in this embodiment includes the following steps.

S201: A compute device obtains a first aggregation condition and an original topological graph that are input by a user.

In some possible embodiments, the original topological graph includes original central nodes and original edge nodes. The original central nodes include a first original central node and a second original central node. The original edge nodes include a first original edge node and a second original edge node. The first original central node is connected to the first original edge node through a link, and the second original central node is connected to the second original edge node through a link. When the original topological graph is a star topological graph, there is no link between the original edge nodes. Herein, the first original edge node and the second original edge node may be a same node or different nodes. Although only the first original central node, the second original central node, the first original edge node, and the second original edge node are used as an example for description in the foregoing example, in actual practice, there may be more original central nodes, there may be more original edge nodes, and there may be more links between the original central nodes and the original edge nodes. In this case, the original topological graph is more complex. The original topological graph is described in detail in the embodiment shown in FIG. 2. For details, refer to related descriptions. Details are not described herein again.

In some possible embodiments, the first aggregation condition may be set to default, or may be set by the user. The first aggregation condition may be set based on an original central node, an original edge node, and a link between the original central node and the original edge node. Specifically, when original central nodes include a first original central node and a second original central node, and original edge nodes include a first original edge node and a second original edge node, whether the first aggregation condition is satisfied may be determined based on one or more of the first original central node, the second original central node, the first original edge node, the second original edge node, a link between the first original central node and the first original edge node, and a link between the second original central node and the second original edge node. When original central nodes include a first original central node, a second original central node, and a third original central node, and original edge nodes include a first original edge node, a second original edge node, and a third original edge node, whether the first aggregation condition is satisfied may be determined based on one or more of the first original central node, the second original central node, the third original central node, the first original edge node, the second original edge node, the third original edge node, a link between the first original central node and the first original edge node, a link between the second original central node and the second original edge node, and a link between the third original central node and the third original edge node. Herein, the first original edge node, the second original edge node, and the third original edge node may be a same node or different nodes. As a quantity of the original central nodes and/or a quantity of the original edge nodes in the original topological graph increase/increases, the original topological graph becomes increasingly complex. However, the foregoing first aggregation condition may still be applied by analogy, but in this case, more original central nodes, more original edge nodes, and more links between the original central nodes and the original edge nodes need to be considered.

In a specific embodiment, the first aggregation condition may be that there are links between a plurality of to-be-aggregated nodes and one or more same original edge nodes. The first original central node and the second original central node are used as an example. The first aggregation condition may be that the first original central node and the second original central node are connected to one or more same original edge nodes through links. To be specific, the first aggregation condition may be that a set of original edge nodes connected to the first original central node through links may be the same as a set of original edge nodes connected to the second original central node through links, or there is an intersection set between the set of original edge nodes connected to the first original central node through links and the set of original edge nodes connected to the second original central node through links.

In some possible embodiments, the first aggregation condition may alternatively be that node information of a plurality of to-be-aggregated nodes satisfies a requirement, for example, nodes whose node information indicates an address of Beijing in the node information of the to-be-aggregated nodes are aggregated.

In some possible embodiments, the original topological graph is the original topological graph shown in FIG. 1.

S202: Based on the first aggregation condition, the compute device selects a plurality of first to-be-aggregated nodes from a plurality of original central nodes, and selects a plurality of first to-be-aggregated links from links between the plurality of original central nodes and a plurality of original edge nodes.

In some possible embodiments, the first to-be-aggregated node is an original central node in the original topological graph that satisfies the first aggregation condition, and the first to-be-aggregated link is a link related to the original central node in the original topological graph that satisfies the first aggregation condition. For example, it is assumed that original central nodes include a first original central node A1 and a second original central node A2, original edge nodes include a first original edge node B1 and a second original edge node B2, the first original central node A1 is connected to the first original edge node B1 through a link, the first original central node A1 is connected to the second original edge node B2 through a link, the first original central node A2 is connected to the first original edge node B1 through a link, and the first original central node A2 is connected to the second original edge node B2 through a link. If the first aggregation condition is that there are links between an original central node and two same original edge nodes, first to-be-aggregated nodes include the first original central node A1 and the second original central node A2, and first to-be-aggregated links include the link between the first original central node A1 and the first original edge node B1, the link between the first original central node A1 and the second original edge node B2, the link between the second original central node A2 and the first original edge node B1, and the link between the second original central node A2 and the second original edge node B2. Although only the first original central node, the second original central node, the first original edge node, and the second original edge node are used as an example for description in the foregoing example, in actual practice, there may be more original central nodes, there may be more original edge nodes, and there may be more links between the original central nodes and the original edge nodes. This is not specifically limited herein.

S203: The compute device aggregates the plurality of first to-be-aggregated nodes to obtain a first aggregated node, and aggregates the plurality of first to-be-aggregated links to obtain a first aggregated link.

In some possible embodiments, the first aggregated node is obtained by aggregating the plurality of first to-be-aggregated nodes. The first aggregated link is obtained by aggregating the plurality of to-be-aggregated links. The example in step S202 is still used as an example. The first original central node and the second original central node are aggregated to obtain a first aggregated node C, and the link between the first original central node A1 and the first original edge node B1 and the link between the second original central node A2 and the first original edge node B1 are aggregated to obtain a first aggregated link B 1->C, and the link between the second original central node A1 and the first original edge node B2 and the link between the second original central node A2 and the second original edge node B2 are aggregated into a first aggregated link C->B2.

S204: The compute device generates an aggregated graph based on the first aggregated node and the first aggregated link.

In some possible embodiments, the aggregated graph is generated based on the first aggregated node and the first aggregated link. Step S203 is still used as an example. The aggregated graph generated based on the first aggregated node and the first aggregated link includes the first aggregated node C, the original edge node B1, and the original edge node B2, where the first aggregated node C is connected to the original edge node B1 through the first aggregated link B1->C, and the first aggregated node C is connected to the second original edge node B2 through the first aggregated link C->B2.

S205: The compute device presents the aggregated graph.

When the original topological graph is simple, an aggregation advantage cannot be presented. When a relationship of the original topological graph is complex, the aggregation advantage can be well presented. For example, the original topological graph shown in FIG. 1 is aggregated, to obtain a topological graph shown in FIG. 8. Clearly, a quantity of nodes in FIG. 8 is greatly reduced compared with a quantity of nodes in FIG. 1, and a relationship between nodes in FIG. 8 is clearer than a relationship between nodes in FIG. 1.

In the foregoing embodiment, an example in which both generation and presentation of the aggregated graph are performed by the same compute device is used for description. In actual practice, generation and presentation of the aggregated graph may not be performed by a same device. For example, generation of the aggregated graph is performed by the compute device, the compute device sends the generated aggregated graph to a terminal device, and then the terminal device presents the aggregated graph.

In the foregoing embodiment, an example in which a same aggregation condition is applied to a same original topological graph is used for description. However, in actual practice, the original topological graph may be divided, and different aggregation conditions are applied to different areas. For example, the original topological graph may be divided into a first area and a second area. The first aggregation condition is applied to the first area to obtain a first to-be-aggregated node and a first to-be-aggregated link, and then the first aggregated node and the first aggregated link are generated; a second aggregation condition is applied to the second area to obtain a second to-be-aggregated node and a second to-be-aggregated link, and then the second aggregated node and the second aggregated link are generated; and finally, an aggregated graph is generated based on the first aggregated node, the first aggregated link, the second aggregated node, and the second aggregated link. The foregoing example is described by using an example in which the original topological graph is divided into two areas. However, the original topological graph may also be divided into three or more areas, and different aggregation conditions are respectively applied.

In addition, the original topological graph may first be aggregated based on the first aggregation condition to obtain an aggregated graph, and then the aggregated graph is further aggregated by using the second aggregation condition. In addition, a quantity of aggregation times may be more than two, or may be three or more.

In actual practice, the original topological graph may be transformed by separately using the topological graph transformation method shown in FIG. 2 or the topological graph transformation method shown in FIG. 7, or the original topological graph may be transformed by jointly using the topological graph transformation method shown in FIG. 2 or the topological graph transformation method shown in FIG. 7. For example, when a relationship in the original topological graph is particularly complex, the original central node may first be aggregated by using the topological graph transformation method shown in FIG. 7 to initially simplify the original topological graph, and then the initially simplified original topological graph is further simplified by using the topological graph transformation method shown in FIG. 2.

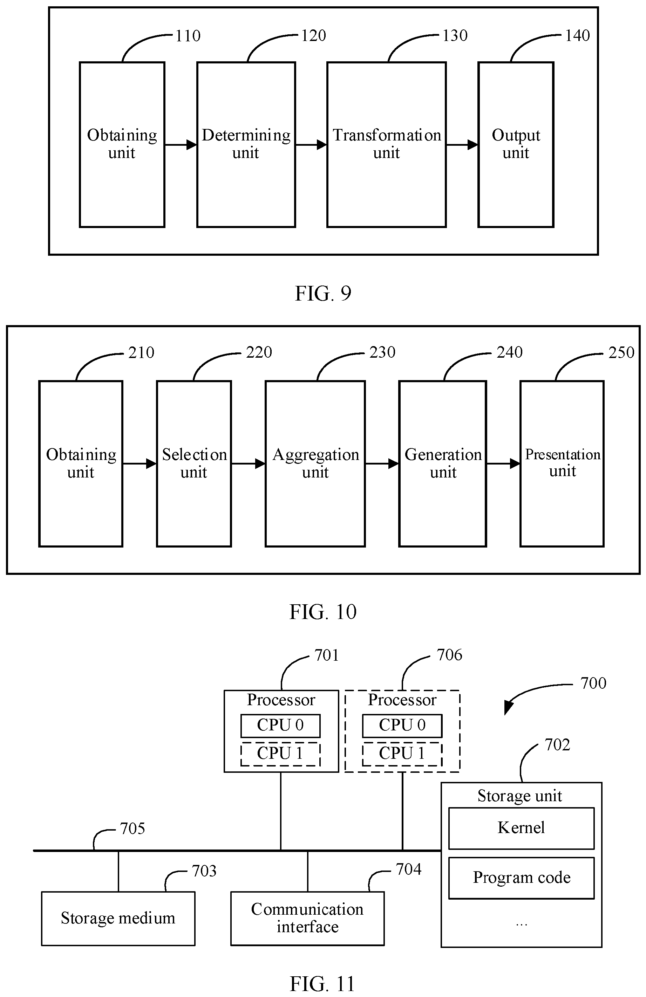

FIG. 9 is a diagram of a structure of a topological graph transformation apparatus according to this application. As shown in FIG. 9, the topological graph transformation apparatus includes an obtaining unit 110, a determining unit 120, a transformation unit 130, and an output unit 140.

The obtaining unit 110 is configured to obtain a first target center type and an original topological graph that are input by a user, where the original topological graph includes an original central node and at least one original edge node, each original edge node is connected to the original central node through a link, and the first target center type is any one of types of original edge nodes in the original topological graph.

The determining unit 120 is configured to determine a first target model based on the first target center type.

The transformation unit 130 is configured to transform the original topological graph based on a first mapping relationship to obtain a first topological graph, where the first mapping relationship is constructed based on a relationship between an original model and the first target model, the original model is a topological model used for the original topological graph, and the first target model is a topological model used for the first topological graph.

The output unit 140 is configured to output the first topological graph, where a first target central node in the first topological graph is an original edge node of the first target center type in the original topological graph.

Herein, the topological graph transformation apparatus shown in FIG. 9 is configured to perform the topological graph transformation method shown in FIG. 2, to transform the original topological graph into the first topological graph. For example, the original topological graph shown in FIG. 1 may be transformed into the first topological graph shown in FIG. 6. Specifically, the obtaining unit 110 may be configured to perform step S101 in the topological graph transformation method shown in FIG. 2. The determining unit 120 may be configured to perform step S102 in the topological graph transformation method shown in FIG. 2. The transformation unit 130 may be configured to perform step S103 in the topological graph transformation method shown in FIG. 2. The output unit 140 may be configured to perform step S104 in the topological graph transformation method shown in FIG. 2. It may be understood that the topological graph transformation apparatus may further include more units, for example, a display unit.

In addition, division into the foregoing units may also be in another form. For example, the determining unit 120 and the transformation unit 130 may be combined into one unit, or the transformation unit 130 may be further divided into a node-link obtaining unit, a mapping table determining unit, a construction unit, and the like.

FIG. 10 is a diagram of a structure of another topological graph transformation apparatus according to this application. As shown in FIG. 10, the topological graph transformation apparatus includes: an obtaining unit 210, a selection unit 220, an aggregation unit 230, a generation unit 240, and a presentation unit 250.

The obtaining unit 210 is configured to obtain a first aggregation condition and an original topological graph that are input by a user, where the original topological graph includes a plurality of original central nodes and a plurality of original edge nodes, and the plurality of original central nodes are connected to the plurality of original edge nodes through links.

The selection unit 220 is configured to: based on the first aggregation condition, select a plurality of first to-be-aggregated nodes from the plurality of original central nodes, and select a plurality of first to-be-aggregated links from the links between the plurality of original central nodes and the plurality of original edge nodes.

The aggregation unit 230 is configured to aggregate the plurality of first to-be-aggregated nodes to obtain a first aggregated node, and aggregate the plurality of first to-be-aggregated links to obtain a first aggregated link.

The generation unit 240 is configured to generate an aggregated graph based on the first aggregated node and the first aggregated link.

The presentation unit 250 is configured to present the aggregated graph.

Herein, the topological graph transformation apparatus shown in FIG. 10 is configured to perform the topological graph transformation method shown in FIG. 7, to transform the original topological graph into the aggregated graph. For example, the original topological graph shown in FIG. 1 may be transformed into the aggregated graph shown in FIG. 8. Specifically, the obtaining unit 210 may be configured to perform step S201 in the topological graph transformation method shown in FIG. 7. The selection unit 220 may be configured to perform step S202 in the topological graph transformation method shown in FIG. 7. The aggregation unit 230 may be configured to perform step S203 in the topological graph transformation method shown in FIG. 2. The generation unit 240 may be configured to perform step S204 in the topological graph transformation method shown in FIG. 7. The presentation unit 250 may be configured to perform step S205 in the topological graph transformation method shown in FIG. 7. It may be understood that the topological graph transformation apparatus may further include more units or fewer units, for example, may not include the presentation unit 250.

In addition, division into the foregoing units may also be in another form. For example, the selection unit 220, the aggregation unit 230, and the generation unit 240 may be combined into one unit, or the selection unit 220 may be further divided into a node selection unit and a link selection unit.

FIG. 11 is a diagram of a structure of a compute device according to this application. As shown in FIG. 11, the compute device in this embodiment includes a processor 701, a storage unit 702, a storage medium 703, and a communication interface 704. The processor 701, the storage unit 702, the storage medium 703, and the communication interface 704 communicate with each other through a bus 707 or by using other means such as wireless transmission.

The processor 701 includes a plurality of general-purpose processors, such as CPUs. The hardware chip is an application-specific integrated circuit (application-specific integrated circuit, ASIC), a programmable logic device (programmable logic device, PLD), or a combination thereof. The PLD is a complex programmable logic device (complex programmable logic device, CPLD), a field-programmable gate array (field-programmable gate array, FPGA), generic array logic (generic array logic, GAL), a data processing unit (data processing unit, DPU), a system on chip (system on chip, SoC), or any combination thereof. The processor 701 executes various types of digital storage instructions, for example, a software or firmware program stored in the storage unit 702, so that the compute device 700 can provide a plurality of services of a wide range.

In a specific implementation, in an embodiment, the processor 701 includes one or more CPUs, for example, a CPU 0 and a CPU 1 shown in FIG. 11.

In a specific implementation, in an embodiment, the compute device 700 also includes a plurality of processors, for example, the processor 701 and a processor 706 shown in FIG. 11. Each of the processors may be a single-core processor (single-CPU) or a multi-core processor (multi-CPU). The processor herein means one or more devices, circuits, and/or processing cores configured to process data (for example, computer program instructions).

The storage unit 702 is configured to store program code, and the processor 701 controls execution of the program code, to perform processing steps of the topological graph transformation method in any one of the embodiments in FIG. 1 to FIG. 8. The program code includes one or more software units.

When the compute device 700 performs the topological graph transformation method shown in FIG. 2, the one or more software units are the obtaining unit 110, the determining unit 120, the transformation unit 130, and the output unit 140 in the embodiment in FIG. 9. The obtaining unit 110 may be configured to perform step S101 in the topological graph transformation method shown in FIG. 2. The determining unit 120 may be configured to perform step S102 in the topological graph transformation method shown in FIG. 2. The transformation unit 130 may be configured to perform step S103 in the topological graph transformation method shown in FIG. 2. The output unit 140 may be configured to perform step S104 in the topological graph transformation method shown in FIG. 2. Alternatively, the obtaining unit 110 and the output unit 140 may be executed by the communication interface 704, and the determining unit 120 and the transformation unit 130 may be executed by the processor.

When the compute device 700 performs the topological graph transformation method shown in FIG. 7, the one or more software units are the obtaining unit 210, the selection unit 220, the aggregation unit 230, the generation unit 240, and the presentation unit 250 in the embodiment of FIG. 10. The obtaining unit 210 may be configured to perform step S201 in the topological graph transformation method shown in FIG. 7. The selection unit 220 may be configured to perform step S202 in the topological graph transformation method shown in FIG. 7. The aggregation unit 230 may be configured to perform step S203 in the topological graph transformation method shown in FIG. 2. The generation unit 240 may be configured to perform step S204 in the topological graph transformation method shown in FIG. 7. The presentation unit 250 may be configured to perform step S205 in the topological graph transformation method shown in FIG. 7. Alternatively, the obtaining unit 110 may be executed by the communication interface 704, and the selection unit 220, the aggregation unit 230, and the generation unit 240 may be executed by the processor.

The storage unit 702 includes a read-only memory and a random access memory, and provides instructions and data for the processor 701. The storage unit 702 further includes a non-volatile random access memory.

The storage unit 702 is a volatile memory or a non-volatile memory, or includes both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM), and is used as an external cache. Through an example but not limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM); or a hard disk (hard disk), a USB flash drive (universal serial bus, USB), a flash memory (flash memory), an SD card (secure digital memory Card, SD card), a memory stick, or the like. The hard disk is a hard disk drive (hard disk drive, HDD), a solid-state drive (solid state disk, SSD), a mechanical hard disk drive (mechanical hard disk, HDD), or the like. This is not specifically limited in this application.

The storage medium 703 is a carrier for storing data, for example, a hard disk (hard disk), a USB flash drive (universal serial bus, USB), a flash memory (flash memory), an SD card (secure digital memory Card, SD card), or a memory stick. The hard disk may be a hard disk drive (hard disk drive, HDD), a solid-state drive (solid state disk, SSD), a mechanical hard disk drive (mechanical hard disk, HDD), or the like. This is not specifically limited in this application.

The communication interface 704 is a wired interface (for example, an Ethernet interface), an internal interface (for example, a peripheral component interconnect express (Peripheral Component Interconnect express, PCIe) interface), a wired interface (for example, an Ethernet interface), or a wireless interface (for example, a cellular network interface or a wireless local area network interface). The communication interface is configured to communicate with another device or module.

The bus 705 is a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL) bus, a cache coherent interconnect for accelerators (cache coherent interconnect for accelerators, CCIX) bus, or the like. The bus 705 is classified into an address bus, a data bus, a control bus, and the like.

In addition to the data bus, the bus 705 further includes a power bus, a control bus, a status signal bus, and the like. However, for clear description, various buses are marked as the bus 705 in the figure.

It should be noted that FIG. 11 is merely a possible implementation of this embodiment of this application. In actual practice, the compute device 700 may further include more or fewer components. This is not limited herein. For content that is not shown or not described in this embodiment of this application, refer to related descriptions in the embodiments in FIG. 1 to FIG. 8. Details are not described herein again.

An embodiment of this application further provides a compute device cluster. The compute device cluster includes at least one compute device 700. A storage unit 702 in one or more compute devices 700 in the compute device cluster may store same or different instructions used for performing the topological graph transformation method. For content that is not shown or not described in this embodiment of this application, refer to related descriptions in the embodiments in FIG. 1 to FIG. 8. Details are not described herein again.

An embodiment of this application further provides a computer program product including instructions. The computer program product may be software or a program product that includes instructions and that can run on a compute device or be stored in any usable medium. When the computer program product runs on at least one compute device, the at least one compute device is caused to perform the topological graph transformation method. For content that is not shown or not described in this embodiment of this application, refer to related descriptions in the embodiments in FIG. 1 to FIG. 8. Details are not described herein again.

An embodiment of this application further provides a computer-readable storage medium. The computer-readable storage medium may be any usable medium that can be stored by a compute device, or a data storage device like a data center, including one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive), or the like. The computer-readable storage medium includes instructions, and the instructions instruct a compute device to perform the topological graph transformation method. For content that is not shown or not described in this embodiment of this application, refer to related descriptions in the embodiments in FIG. 1 to FIG. 8. Details are not described herein again.

All or part of the foregoing embodiments may be implemented by using software, hardware, firmware, or any combination thereof. When software is used to implement the embodiments, all or part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a storage disk, or a magnetic tape), an optical medium (for example, a DVD), or a semiconductor medium.

## Claims

1. A topological graph transformation method, comprising:

    obtaining a first target center type and an original topological graph that are input by a user, wherein the original topological graph comprises an original central node and at least one original edge node, each original edge node is connected to the original central node through a link, and the first target center type is any one of types of original edge nodes in the original topological graph;
    determining a first target model based on the first target center type;
    transforming the original topological graph based on a first mapping relationship to obtain a first topological graph, wherein the first mapping relationship is constructed based on a relationship between an original model and the first target model, the original model is a topological model used for the original topological graph, and the first target model is a topological model used for the first topological graph; and
    outputting the first topological graph, wherein a first target central node in the first topological graph is an original edge node of the first target center type in the original topological graph.

2. The method according to claim 1, wherein the method further comprises:

    obtaining a second target center type input by the user, wherein the second target center type is another one of the types of the original edge nodes in the original topological graph;
determining a second target model based on the second target center type;
transforming the original topological graph based on a second mapping relationship to obtain a second topological graph, wherein the second mapping relationship is constructed based on a relationship between the original model and the second target model, and the second target model is a topological model used for the second topological graph; and
outputting the second topological graph, wherein a second target central node in the second topological graph is an original edge node of the second target center type in the original topological graph.

3. The method according to claim 1 or 2, wherein a first target edge node in the first topological graph is an original edge node in the original topological graph other than the original edge node of the first target center type, and the first target central node is connected to the first target edge node through a link.

4. The method according to claim 3, wherein the method further comprises:

counting a quantity of links between the first target central node and the first target edge node; and
displaying the quantity on the links between the first target central node and the first target edge node.

5. The method according to any one of claims 1 to 4, wherein transforming the original topological graph based on the first mapping relationship to obtain the first topological graph comprises:

obtaining a node set and a link set based on the original topological graph, wherein the node set comprises the original central node and the at least one original edge node, and the link set comprises the link between each original edge node and the original central node;
determining a mapping table based on the node set and the link set, wherein the mapping table comprises a mapping relationship between the original central node and a mapping set, and the mapping set comprises the at least one original edge node; and
constructing the first topological graph by using the original edge node of the first target center type in the mapping set as the first target central node.

6. The method according to any one of claims 1 to 5, wherein the original edge node comprises one or more of a user account, contact information, delivery information, and payment information.

7. A topological graph transformation method, comprising:

obtaining a first aggregation condition and an original topological graph that are input by a user, wherein the original topological graph comprises a plurality of original central nodes and a plurality of original edge nodes, and the plurality of original central nodes are connected to the plurality of original edge nodes through links;
based on the first aggregation condition, selecting a plurality of first to-be-aggregated nodes from the plurality of original central nodes, and selecting a plurality of first to-be-aggregated links from the links between the plurality of original central nodes and the plurality of original edge nodes;
aggregating the plurality of first to-be-aggregated nodes to obtain a first aggregated node;
aggregating the plurality of first to-be-aggregated links to obtain a first aggregated link; and
generating an aggregated graph based on the first aggregated node and the first aggregated link.

8. The method according to claim 7, wherein the first aggregation condition is that there are links between the plurality of to-be-aggregated nodes and one or more same original edge nodes.

9. The method according to claim 7 or 8, wherein the original topological graph comprises a first area and a second area;
based on the first aggregation condition, selecting the plurality of first to-be-aggregated nodes from the plurality of original central nodes, and selecting the plurality of first to-be-aggregated links from the links between the plurality of original central nodes and the plurality of original edge nodes comprises:

based on the first aggregation condition, selecting a plurality of first to-be-aggregated nodes from a plurality of original central nodes in the first area, and selecting a plurality of first to-be-aggregated links from links between the plurality of original central nodes and a plurality of original edge nodes in the first area;
the method further comprises:

obtaining a second aggregation condition input by the user, wherein the first aggregation condition is different from the second aggregation condition;

based on the second aggregation condition, selecting a plurality of second to-be-aggregated nodes from a plurality of original central nodes in the second area, and selecting a plurality of second to-be-aggregated links from links between the plurality of original central nodes and a plurality of edge nodes in the second area;

aggregating the plurality of second to-be-aggregated nodes to obtain a second aggregated node; and

aggregating the plurality of second to-be-aggregated nodes to obtain a second aggregated link; and

generating the aggregated graph based on the first aggregated node and the first aggregated link comprises:

generating the aggregated graph based on the first aggregated node, the first aggregated link, the second aggregated node, and the second aggregated link.

10. The method according to claim 9, wherein the method further comprises:
displaying, on the first aggregated node, one or both of a quantity of the first to-be-aggregated nodes that are aggregated and information about the first to-be-aggregated nodes.

11. A topological graph transformation apparatus, comprising:

an obtaining unit, configured to obtain a first target center type and an original topological graph that are input by a user, wherein the original topological graph comprises an original central node and at least one original edge node, each original edge node is connected to the original central node through a link, and the first target center type is any one of types of original edge nodes in the original topological graph;

a determining unit, configured to determine a first target model based on the first target center type;

a transformation unit, configured to transform the original topological graph based on a first mapping relationship to obtain a first topological graph, wherein the first mapping relationship is constructed based on a relationship between an original model and the first target model, the original model is a topological model used for the original topological graph, and the first target model is a topological model used for the first topological graph; and

an output unit, configured to output the first topological graph, wherein a first target central node in the first topological graph is an original edge node of the first target center type in the original topological graph.

12. The apparatus according to claim 11, wherein

the obtaining unit is further configured to obtain a second target center type input by the user, wherein the second target center type is another one of the types of the original edge nodes in the original topological graph;

the determining unit is further configured to determine a second target model based on the second target center type;

the transformation unit is further configured to transform the original topological graph based on a second mapping relationship to obtain a second topological graph, wherein the second mapping relationship is constructed based on a relationship between the original model and the second target model, and the second target model is a topological model used for the second topological graph; and

the output unit is further configured to output the second topological graph, wherein a second target central node in the second topological graph is an original edge node of the second target center type in the original topological graph.

13. The apparatus according to claim 11 or 12, wherein a first target edge node in the first topological graph is an original edge node in the original topological graph other than the original edge node of the first target center type, and the first target central node is connected to the first target edge node through a link.

14. The apparatus according to claim 13, wherein the apparatus further comprises a counting unit, wherein

the counting unit is configured to count a quantity of links between the first target central node and the first target edge node; and

the output unit is further configured to display the quantity on the links between the first target central node and the first target edge node.

15. The apparatus according to any one of claims 11 to 14, wherein
the transformation unit is configured to: obtain a node set and a link set based on the original topological graph, wherein the node set comprises the original central node and the at least one original edge node, and the link set comprises the link between each original edge node and the original central node; determine a mapping table based on the node set and the link set, wherein the mapping table comprises a mapping relationship between the original central node and a mapping set, and the mapping set comprises the at least one original edge node; and construct the first topological graph by using the original edge node of the first target center type in the mapping set as the first target central node.

16. The apparatus according to any one of claims 11 to 15, wherein the original edge node comprises one or more of a user account, contact information, delivery information, and payment information.

17. A topological graph transformation apparatus, comprising:

an obtaining unit, configured to obtain a first aggregation condition and an original topological graph that are input by a user, wherein the original topological graph comprises a plurality of original central nodes and a plurality of original edge nodes, and the plurality of original central nodes are connected to the plurality of original edge nodes through links;
a selection unit, configured to: based on the first aggregation condition, select a plurality of first to-be-aggregated nodes from the plurality of original central nodes, and select a plurality of first to-be-aggregated links from the links between the plurality of original central nodes and the plurality of original edge nodes;
an aggregation unit, configured to aggregate the plurality of first to-be-aggregated nodes to obtain a first aggregated node, and aggregate the plurality of first to-be-aggregated links to obtain a first aggregated link; and
a generation unit, configured to generate an aggregated graph based on the first aggregated node and the first aggregated link.

18. The apparatus according to claim 17, wherein the first aggregation condition is that there are links between the plurality of to-be-aggregated nodes and one or more same original edge nodes.

19. The apparatus according to claim 17 or 18, wherein the original topological graph comprises a first area and a second area;

the selection unit is further configured to: based on the first aggregation condition, select a plurality of first to-be-aggregated nodes from a plurality of original central nodes in the first area, and select a plurality of first to-be-aggregated links from links between the plurality of original central nodes and a plurality of original edge nodes in the first area;
the obtaining unit is configured to obtain a second aggregation condition input by the user, wherein the first aggregation condition is different from the second aggregation condition;
the selection unit is further configured to: based on the first aggregation condition, select a plurality of second to-be-aggregated nodes from a plurality of original central nodes in the second area, and select a plurality of second to-be-aggregated links from links between the plurality of original central nodes and a plurality of edge nodes in the second area;
the aggregation unit is further configured to: aggregate the plurality of second to-be-aggregated nodes to obtain a second aggregated node, and aggregate the plurality of second to-be-aggregated nodes to obtain a second aggregated link; and
the generation unit is further configured to generate the aggregated graph based on the first aggregated node, the first aggregated link, the second aggregated node, and the second aggregated link.

20. The apparatus according to claim 19, wherein the display unit is further configured to display, on the first aggregated node, one or both of a quantity of the first to-be-aggregated nodes that are aggregated and information about the first to-be-aggregated nodes.

21. A compute device, wherein the compute device comprises a processor and a memory, the memory is configured to store instructions, and the processor is configured to execute the instructions, to cause the compute device to implement the method according to any one of claims 1 to 10.

22. A compute cluster, comprising a plurality of compute devices, wherein each compute device comprises a processor and a memory, the memory is configured to store instructions, and the processor is configured to execute the instructions, to cause the plurality of compute devices to implement the method according to any one of claims 1 to 10.

23. A computer-readable storage medium, wherein the computer-readable storage medium stores instructions, and when the instructions are run by a compute device or a compute device cluster, the method according to any one of claims 1 to 10 is implemented.

24. A computer program product, comprising program code, wherein when the program code is executed, the method according to any one of claims 1 to 10 is implemented.

● First-type node

○ Second-type node

FIG. 1

```
                                              ┌─ S101
┌─────────────────────────────────────────────────┐
│ A compute device obtains a first target center type and an original │
│        topological graph that are input by a user        │
└─────────────────────────────────────────────────┘
                        │
                        ▼                     ┌─ S102
┌─────────────────────────────────────────────────┐
│ The compute device determines a first target model based on the first │
│                  target center type                 │
└─────────────────────────────────────────────────┘
                        │
                        ▼                     ┌─ S103
┌─────────────────────────────────────────────────┐
│ The compute device transforms the original topological graph based │
│ on a first mapping relationship to obtain a first topological graph │
└─────────────────────────────────────────────────┘
                        │
                        ▼                     ┌─ S104
┌─────────────────────────────────────────────────┐
│            Output the first topological graph            │
└─────────────────────────────────────────────────┘
```

FIG. 2

FIG. 3A

FIG. 3B

FIG. 3C

FIG. 3D

S1031

Obtain a node set and a link set

S1032

Determine a mapping table based on the node set and the link set

S1033

Construct a first topological graph by using an original edge node of a first target center type in a mapping set as a first target central node

FIG. 4

A1

B1

B2

First target central
node
(corresponding to B1)

First target edge node
(corresponding to B2)

Second target central
node
(corresponding to B2)

Second target edge
node
(corresponding to B1)

FIG. 5A

A1

B1

B2

B3

First target central
node
(corresponding to B1)

First target edge node
(corresponding to B2)

Third target edge node
(corresponding to B3)

Second target central
node
(corresponding to B2)

Second target edge
node
(corresponding to B1)

Fourth target edge node
(corresponding to B3)

Third target central
node
(corresponding to B3)

Fifth target edge node
(corresponding to B1)

Sixth target edge node
(corresponding to B2)

FIG. 5B

First target central
node
(corresponding to B1)

First target edge node
(corresponding to B2)

A1

B1

2

Second target central
node
(corresponding to B2)

Second target edge
node
(corresponding to B1)

A2

B2

2

FIG. 5C

FIG. 6

S201

A compute device obtains a first aggregation condition and an original topological graph that are input by a user

S202

Select a plurality of first to-be-aggregated nodes and a plurality of first to-be-aggregated links

S203

Obtain a first aggregated node and a first aggregated link through aggregation

S204

Generate an aggregated graph

S205

Display the aggregated graph

FIG. 7

FIG. 8

FIG. 9

FIG. 10

FIG. 11

## INTERNATIONAL SEARCH REPORT

| International application No. |
|---|
| **PCT/CN2024/123367** |

### A. CLASSIFICATION OF SUBJECT MATTER

G06F16/901(2019.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, USTXT, EPTXT, WOTXT, CNTXT, CNKI: 拓扑图, 转换, 中心, 目标, 节点, 模型, 边缘, topography, transition, center, aim, node, model, edge

### C. DOCUMENTS CONSIDERED TO BE RELEVANT

| Category* | Citation of document, with indication, where appropriate, of the relevant passages | Relevant to claim No. |
|---|---|---|
| PX | CN 117453960 A (HUAWEI TECHNOLOGIES CO., LTD.) 26 January 2024 (2024-01-26) claims 1-24 | 1-24 |
| A | CN 106161106 A (BEIJING QIYI CENTURY SCIENCE & TECHNOLOGY CO., LTD.) 23 November 2016 (2016-11-23) claims 1-5 | 1-24 |
| A | CN 109840533 A (CHINA MOBILE GROUP ZHEJIANG CO., LTD. et al.) 04 June 2019 (2019-06-04) entire document | 1-24 |
| A | US 6246689 B1 (LUCENT TECHNOLOGIES INC.) 12 June 2001 (2001-06-12) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 November 2024** | **04 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/123367**

| Patent document cited in search report | | | Publication date (day/month/year) | Patent family member(s) | Publication date (day/month/year) |
|---|---|---|---|---|---|
| CN | 117453960 | A | 26 January 2024 | None | |
| CN | 106161106 | A | 23 November 2016 | None | |
| CN | 109840533 | A | 04 June 2019 | None | |
| US | 6246689 | B1 | 12 June 2001 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311316222X